# EUROPEAN PATENT APPLICATION

(11) **EP 4 607 422 A1**
(43) Date of publication of application: **27.08.2025**
(21) Application number: 23879396.2
(22) Date of filing: 22.06.2023
(51) Int. Cl.: G06Q 10/0631, G05B 19/418, G06Q 50/04

(54) **INFORMATION PROCESSING METHOD, INFORMATION PROCESSING DEVICE, AND COMPUTER PROGRAM**

(30) Priority: 17.10.2022 JP 2022166437
(71) Applicant: The Japan Steel Works, Ltd., Tokyo 141-0032 (JP)
(72) Inventor: SUZUKI, Jun, Tokyo 141-0032 (JP); YAMAZAWA, Takayuki, Tokyo 141-0032 (JP); XIONG, Tingbi, Tokyo 141-0032 (JP)
(74) Representative: Simmons & Simmons LLP (Munich)
(86) International application number: PCT/JP2023/023194
(87) International publication number: WO 2024/084742

(57) **Abstract**

The present invention involves: storing, in a database, identifiers for identifying a plurality of users, factory identifiers for identifying a plurality of factories belonging to the plurality of users, equipment identifiers for identifying a plurality of industrial machines installed in the plurality of factories, and equipment-related information including specifications for the plurality of industrial machines in association with one another; reading from the database, factory identifiers, equipment identifiers, and equipment-related information items which are associated with an identifier of one of the users; creating an equipment list which includes a plurality of factories belonging to said one user, a plurality of industrial machines installed in the plurality of factories, and the corresponding equipment-related information items; and providing data of the created equipment list to the one user and external relevant parties relating to the one user.

## Description

### Technical Field

The present invention relates to an information processing method, an information processing apparatus and a computer program.

### Background Art

Patent Literature 1 discloses an industrial machine management apparatus that allows a group manager to easily grasp the overall situation of industrial machines within a group. Specifically, based on information concerning production by each injection molding machine of the multiple injection molding machines that are installed in one factory and classified into groups according to predetermined criteria, the industrial machine management apparatus calculates and displays statistics of information concerning the overall production by the injection molding machines that belong to the groups as management information.

### Citation List

### Patent Literature

Patent Literature 1: Japanese Patent Application Laid-Open Publication No. 2018-94888

### Summary of Invention

### Technical Problems

It is, however, not possible to manage the specifications of multiple industrial machines installed in multiple factories that belong to one user.

If the specifications of the industrial machines installed in all the factories of the user can be grasped, the industrial machines can appropriately be relocated and operated according to a production plan, but grasping the specifications of the industrial machines in each of the factories is not always easy. On the other hand, sales representatives who sell industrial machines or components to users of industrial machines or perform maintenance inspections thereof can make more appropriate proposals if they can grasp the specifications of industrial machines at each of the factories that belongs to the users, but grasping the aforementioned specifications is difficult.

An object of the present disclosure is to provide an information processing method, an information processing apparatus and a computer program that can provide the user and an external party of the user with a machine list indicating the specifications of multiple industrial machines installed in multiple factories that belong to the user.

### Solution to Problems

An information processing method according to one aspect of the present disclosure comprises storing, in a database, an identifier for identifying each of a plurality of users, a factory identifier for identifying each of a plurality of factories that belong to each of the plurality of users, a machine identifier for identifying each of a plurality of industrial machines installed in each of the plurality of factories, and machine-related information including specifications of the plurality of industrial machines in association with each other; reading, from the database, the factory identifier, the machine identifier and the machine-related information that are associated with the identifier of one of the users and creating a machine list including the plurality of factories that belong to the one of the users, the plurality of industrial machines that are installed in the plurality of factories and the machine-related information; and providing the one of the users and an external party associated with the one of the users with data of the created machine list.

An information processing apparatus according to one aspect of the present disclosure comprises: a database storing an identifier for identifying each of a plurality of users, a factory identifier for identifying each of a plurality of factories that belong to each of the plurality of users, a machine identifier for identifying each of a plurality of industrial machines installed in each of the plurality of factories, and machine-related information including specifications of the plurality of industrial machines in association with each other; a processing unit that reads, from the database, the factory identifier, the machine identifier and the machine-related information that are associated with the identifier of one of the users and creates a machine list including the plurality of factories that belong to the one of the users, the plurality of industrial machines that are installed in the plurality of factories and the machine-related information; and a communication unit that provides the one of the users and an external party associated with the one of the users with data of the created machine list.

A computer program according to one aspect of the present disclosure causes a computer to execute processing of: storing, in a database, an identifier for identifying each of a plurality of users, a factory identifier for identifying each of a plurality of factories that belong to each of the plurality of users, a machine identifier for identifying each of a plurality of industrial machines installed in each of the plurality of factories, and machine-related information including specifications of the plurality of industrial machines in association with each other; reading, from the database, the factory identifier, the machine identifier and the machine-related information that are associated with the identifier of one of the users and creating a machine list including the plurality of factories that belong to the one of the users, the plurality of industrial machines that are installed in the plurality of factories and the machine-related information; and providing the one of the users and an external party associated with the one of the users with data of the created machine list. Advantageous Effects of Invention

According to the present disclosure, a machine list indicating the specifications of multiple industrial machines installed in multiple factories that belong to the user can be provided to the user and an external party associated with the user.

### Brief Description of Drawings

FIG. 1 is a block diagram depicting an example of the configuration of a molding machine system according to Embodiment 1.
FIG. 2 is a conceptual diagram of the molding machine system according to Embodiment 1.
FIG. 3 is a block diagram depicting an example of the configuration of a data collection device according to Embodiment 1.
FIG. 4 is a block diagram depicting an example of the configuration of an information processing apparatus according to Embodiment 1.
FIG. 5 is a conceptual diagram depicting an example of a record layout of a collection data DB.
FIG. 6 is a conceptual diagram depicting an example of a record layout of a user DB.
FIG. 7 is a conceptual diagram depicting an example of a record layout of a delivered machine DB.
FIG. 8 is a conceptual diagram depicting an example of a record layout of a component DB.
FIG. 9 is a conceptual diagram depicting an example of a record layout of a document DB.
FIG. 10 is a conceptual diagram depicting an example of a record layout of an estimate DB.
FIG. 11 is a conceptual diagram depicting an example of a record layout of an ordering DB.
FIG. 12 is a block diagram depicting an inference processing unit for predicting a remaining life or an abnormality degree of a component.
FIG. 13 is a flowchart depicting a processing procedure of the information processing apparatus according to Embodiment 1.
FIG. 14 is a schematic diagram depicting an example of a delivered machine list display.
FIG. 15 is a schematic diagram depicting an example of a delivered machine detail screen.
FIG. 16 is a schematic diagram depicting an example of a document list display screen.
FIG 17 is a schematic diagram depicting an example of a to-be-estimated component selection screen.
FIG. 18 is a schematic diagram depicting an example of an estimate history list display screen.
FIG. 19 is a schematic diagram depicting an example of an ordering status list display screen.
FIG. 20 is a flowchart depicting an information processing procedure including processing of making a transition to a machine management site according to Embodiment 2.
FIG. 21 is a schematic diagram depicting an example of an inference result display screen.
FIG. 22 is a flowchart depicting an information processing procedure including processing of making a transition to a machine condition information provision site according to Embodiment 2.

### Description of Embodiments

An information processing method, an information processing apparatus and a computer program according to embodiments of the present disclosure will be described below with reference to the drawings. It should be noted that the present disclosure is not limited to these examples, but is indicated by the scope of claims, and is intended to include all modifications within the meaning and scope equivalent to the scope of claims. Furthermore, at least parts of the following embodiments may arbitrarily be combined.

### Embodiment 1

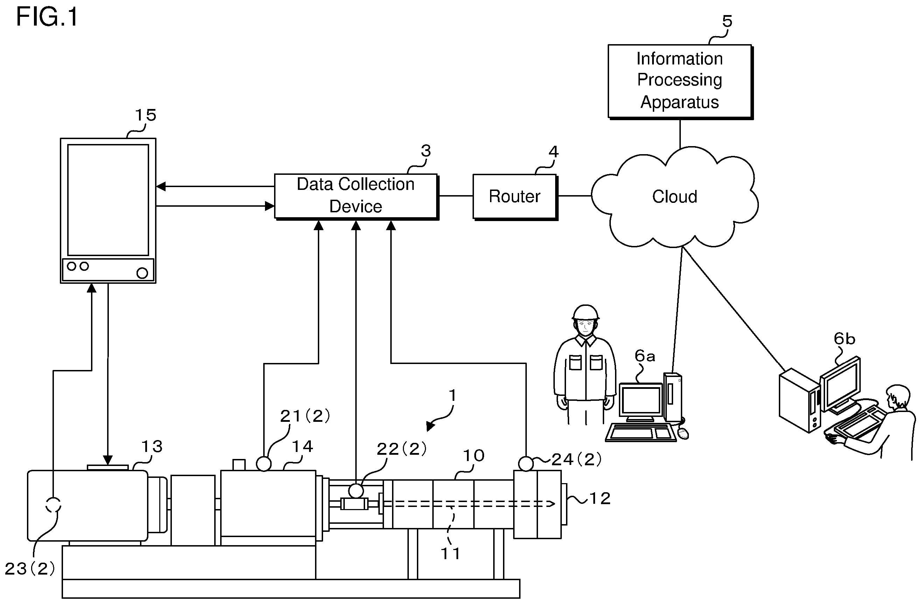

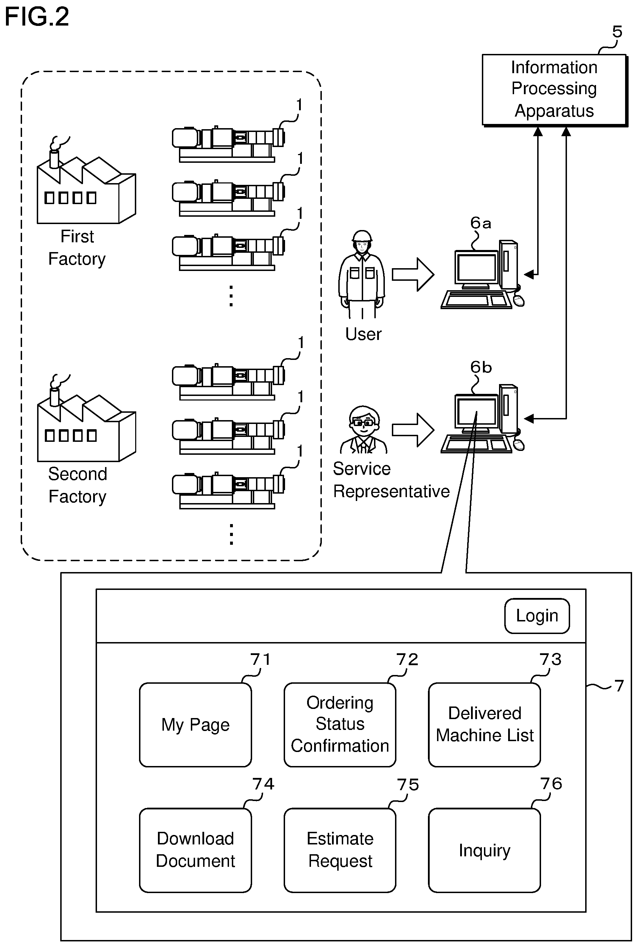

FIG. 1 is a block diagram illustrating an example of the configuration of a molding machine system according to Embodiment 1, while FIG. 2 is a conceptual diagram of the molding machine system according to Embodiment 1. The molding machine system includes a molding machine 1, multiple sensors 2, a data collection device 3, a router 4, an information processing apparatus 5 and terminal devices 6a, 6b. The molding machine 1 includes an injection molding machine and an extruder. The molding machine 1 is described as an extruder by way of example.

While one molding machine 1 and one data collection device 3 are depicted in FIG. 1, the information processing apparatus 5 is connected to multiple data collection devices 3 (not illustrated) through a network. The data collection device 3 is connected to one or more molding machines 1. The information processing apparatus 5 can collect information related to each of the multiple molding machines 1, manage the specification and condition of each of the molding machines 1 and infer the remaining life or the degree of an abnormality of one or more components constituting each of the molding machines 1. The multiple molding machines 1 and the data collection device 3 are assumed to be installed in each of the factories of multiple users who possess the molding machines 1. In Embodiment 1, it is assumed that one user has multiple factories, and one or more molding machines 1 are installed at each of the multiple factories as illustrated in FIG. 2. The user is an organization such as a cooperation or the like that possesses the molding machines 1. Moreover, the user includes a staff member, an employee or the like as a member of the organization who operates the terminal device 6a. The organization, staff member or employee will be hereafter simply referred to as a user. As illustrated in FIG. 2, a person in charge of providing service, such as a sales representative who sells a molding machine 1 or a component constituting the molding machine 1, a maintenance management person who performs maintenance management of the molding machine 1 of the user and the like is assigned to the user. The person in charge of providing service will be hereafter simply referred to as a sales representative. Moreover, a company, which is on the side of the sales representative, that offers maintenance and management services for the components constituting the molding machine 1 to the user, and manufactures and sells the components will be referred to as a maintenance and management company.

The terminal devices 6a, 6b are each a communication terminal with a display portion such as a computer, a tablet terminal or a smartphone. The terminal device 6a is a terminal to be used by the user. The terminal device 6b is a terminal to be used by a service representative.

### <Molding Machine 1>

The molding machine 1 is provided with a cylinder 10 with a hopper through which a resin raw material is input, two screws 11 and a die 12 that is disposed at the outlet portion of the cylinder 10. The two screws 11 are arranged substantially parallel with each other in mesh and are rotatably inserted into a hole of the cylinder 10. The two screws 11 carry the resin raw material input into the hopper in the direction of extrusion (to the right in FIG. 1), and melt and knead the resin raw material. The molten resin raw material is discharged from the die 12 with a through hole.

For the screw 11, multiple types of screw pieces are combined and integrated into one bar of screw 11. For example, the screw 11 is configured by arranging and combining a flight screw-shaped forward flight piece that carries a resin raw material in a forward direction, a reverse flight piece that carries a resin raw material in a reverse direction, a kneading piece that kneads a resin raw material and the like, in an order and at positions according to the characteristics of the resin raw material.

The molding machine 1 is further provided with a motor 13 that outputs driving force for rotating the screw 11, a reduction gear 14 that reduces the transmission speed of the driving force from the motor 13 and a control device 15. The screw 11 is coupled to an output shaft of the reduction gear 14. The screw 11 is rotated by the driving force of the motor 13 that is reduced in transmission speed by the reduction gear 14.

### <Sensor 2>

A sensor 2 detects physical quantities related to the condition of a component constituting the molding machine 1, and directly or indirectly outputs the detected and obtained physical quantity data to the data collection device 3. The physical quantity data is data of time-series sensor values indicating the detected physical quantities. The sensor 2 includes sensors provided on the molding machine 1 as requisites for controlling the operation of the molding machine 1 and sensors provided for inferring the life of a component. A part of the multiple sensors 2 are connected to the data collection device 3, so that the data collection device 3 acquires physical quantity data from the sensors 2. Another part of the multiple sensors 2 are connected to the control device 15, so that the data collection device 3 acquires physical quantity data from the sensors 2 via the control device 15.

The physical quantities include temperature, position, velocity, acceleration, current, voltage, pressure, time, image data, torque, force, distortion, power consumption, weight and the like. These physical quantities can be measured with a thermometer, a position sensor, a speed sensor, an accelerometer, an ammeter, a voltmeter, a pressure gauge, a timer, a camera, a torque sensor, a wattmeter, a weightometer and the like.

The multiple sensors 2 include, for example, a first sensor 21 that detects a physical quantity related to the reduction gear 14, a second sensor 22 that detects a physical quantity related to the screws 11, a third sensor 23 that detects a physical quantity related to the motor 13 and a fourth sensor 24 that detects a physical quantity related to the die 12.

The first sensor 21 is a vibration detector or the like that detects vibrations of the reduction gear 14, for example. The second sensor 22 includes a torque detector that detects a shaft torque of the screw 11, a tachometer that detects a rotational speed of the screw 11, a pressure gauge that detects a screw tip pressure, a thermometer that detects a temperature of the screw 11 and a displacement sensor that detects a displacement of the rotation center of the screw 11. The third sensor 23 includes an ammeter that detects a current of the motor and a tachometer that detects a rotational speed of the motor. The fourth sensor 24 is a pressure gauge that detects a die head pressure acting on the die 12.

### <Control Device 15>

The control device 15, which is a computer performing control of the operation of the molding machine 1, is provided with a display unit and a transmission/reception unit (not illustrated) that transmits and receives information to and from the data collection device 3.

More specifically, the control device 15 transmits operating data indicating an operating state of the molding machine 1 to the data collection device 3. The operating data includes, for example, a motor current, a rotational speed of the screw 11, a tip pressure of the screw 11, a die head pressure, a feeder supply amount (supply amount of a resin raw material), an extrusion output, a cylinder temperature and a resin pressure.

The control device 15 receives various graph data and inference result data indicating the remaining life or abnormality degree of a component constituting the molding machine 1 that are transmitted from the data collection device 3. The control device 15 displays the contents of the received graph data and inference result data. In addition, the control device 15 outputs a warning depending on the remaining life or the degree of abnormality indicated by the received inference result data.

### <Data Collection Device 3 >

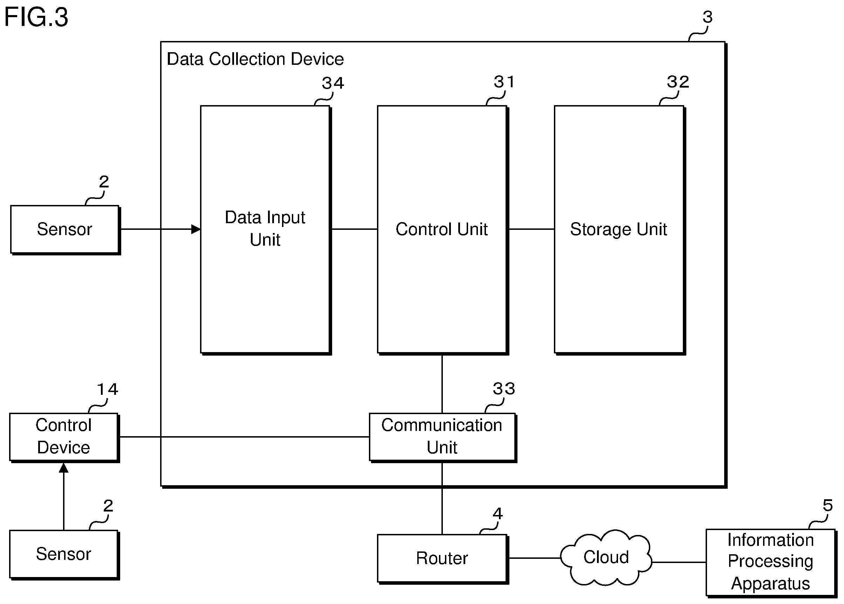

FIG. 3 is a block diagram depicting an example of the configuration of the data collection device 3 according to Embodiment 1. The data collection device 3 is a computer and is provided with a control unit 31, a storage unit 32, a communication unit 33 and a data input unit 34. The storage unit 32, the communication unit 33 and the data input unit 34 are connected to the control unit 31. The data collection device 3 is a Programmable Logic Controller (PLC), for example.

The control unit 31 includes an arithmetic processing circuit such as a CPU (Central Processing Unit), a multi-core CPU, an Application Specific Integrated Circuit (ASIC) or a Field-Programmable Gate Array (FPGA), an internal storage device such as a ROM (Read Only Memory) or a RAM (Random Access Memory), an I/O terminal and the like. The control unit 31 executes a control program stored in the storage unit 32, which will be described later, to perform processing of collecting physical quantity data and transmitting it to the information processing apparatus 5. Note that each functional part of the data collection device 3 may be realized in software, or some or all of the functional parts may be realized in hardware.

The storage unit 32 is a nonvolatile memory such as a hard disk, an EEPROM (Electrically Erasable Programmable ROM) or a flash memory. The storage unit 32 stores a control program for causing the computer to execute processing of collecting physical quantity data.

The communication unit 33 is a communication circuit that transmits and receives information according to a predetermined communication protocol such as the Ethernet (registered trademark). The communication unit 33 is connected to the control device 15 over a first communication network such as LAN or the like, so that the control unit 31 can transmit and receive various information to and from the control device 15 via the communication unit 33. The control unit 31 acquires physical quantity data via the communication unit 33.

The first network is connected to a router 4, and the communication unit 33 is connected via the router 4 to the information processing apparatus 5 on the cloud, which is a second communication network. The control unit 31 can transmit and receive various information to and from the information processing apparatus 5 via the communication unit 33 and the router 4.

The data input unit 34 is an input interface to which signals output from the sensors 2 are input. The data input unit 34 is connected to the sensors 2, so that the control unit 31 acquires physical quantity data via the data input unit 34.

### <Information Processing Apparatus 5>

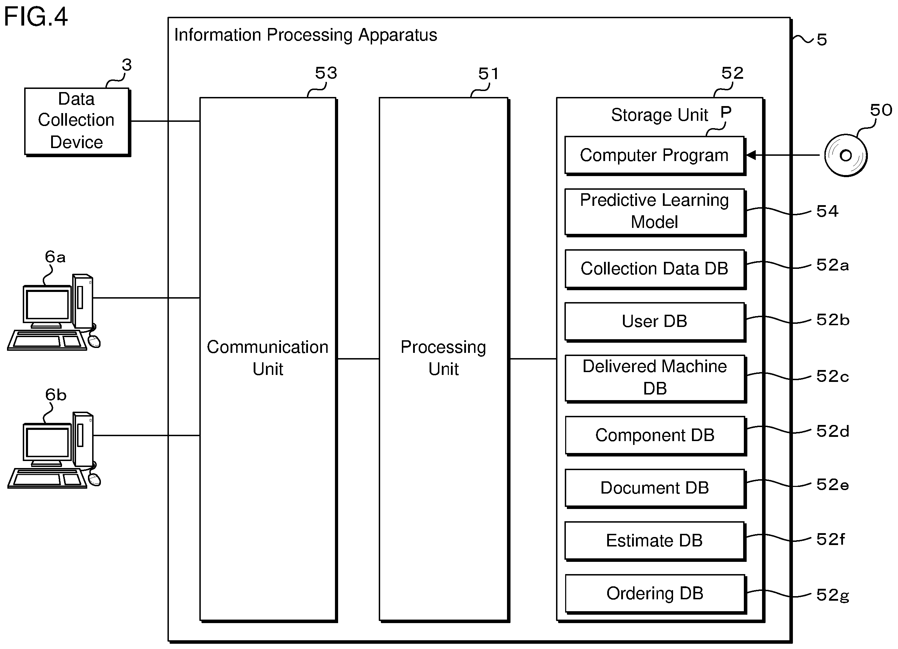

FIG. 4 is a block diagram depicting an example of the configuration of the information processing apparatus 5 according to Embodiment 1. The information processing apparatus 5 is a computer, and is provided with a processing unit 51, a storage unit 52 and a communication unit 53. The storage unit 52 and the communication unit 53 are connected to the processing unit 51. Note that the information processing apparatus 5 may be configured with multiple computers to perform distributed processing, may be realized by multiple virtual machines set up in a single server, may be realized using a cloud server, or may partially be configured with quantum computers.

The processing unit 51, which is a processor, includes an arithmetic processing circuit such as a CPU, a multi-core CPU, a GPU (Graphics Processing Unit), a General-Purpose Computing on Graphics Processing Units (GPGPU), a Tensor Processing Unit (TPU), an ASIC, an FPGA or a Neural Processing Unit (NPU), an internal storage such as a ROM or a RAM, and an I/O terminal. The processing unit 51 functions as the information processing apparatus 5 according to Embodiment 1 by executing a computer program P (computer program product) stored in the storage unit 52, which will be described later.

The information processing apparatus 5 according to Embodiment 1 functions as a machine management web server (first server) that manages the specifications and the conditions of the molding machines 1 of multiple users. The information processing apparatus 5 also functions as a machine condition information provision web server (second server) that provides the user and the sales representative with information on the condition of the molding machines 1. Note that each functional part of the information processing apparatus 5 may be realized in software, or some or all of the functional parts thereof may be realized in hardware. In addition, the information processing apparatus 5 may be composed of multiple computers, each computer functioning as a machine management web server and a machine condition information provision web server.

The communication unit 53 is a communication circuit that transmits and receives information according to a predetermined communication protocol such as the Ethernet (registered trademark). The communication unit 53 is connected to the data collection device 3 and the terminal devices 6a, 6b over the second communication network, so that the processing unit 51 can transmit and receive various types of information to and from the data collection device 3 and the terminal devices 6a, 6b via the communication unit 53.

The storage unit 52 is a nonvolatile memory such as a hard disk, an EEPROM (Electrically Erasable Programmable ROM) or a flash memory. The storage unit 52 stores the computer program P to cause the computer to execute the processing of inferring the life of components constituting the molding machine 1, a predictive learning model 54 as well as a collection data DB (database) 52a, a user DB (database) 52b, a delivered machine DB (database) 52c, a component DB (database) 52d, a document DB (database) 52e, an estimate DB (database) 52f and an ordering DB (database) 52g.

The computer program P or the like may be recorded on a recording medium 50 so as to be readable by the computer. The storage unit 52 stores the computer program P or the like read from the recording medium 50 by a reader (not illustrated). The recording medium 50 is a semiconductor memory such as a flash memory. Furthermore, the recording medium 50 may be an optical disc such as a CD (Compact Disc)-ROM, a DVD (Digital Versatile Disc)-ROM, or a BD (Blu-ray (registered trademark) Disc. Moreover, the recording medium 50 may be a magnetic disk such as a flexible disk or a hard disk, or a magneto-optical disk. In addition, the computer program P or the like may be downloaded from an external server (not illustrated) connected to a communication network (not illustrated) and may be stored in the storage unit 52.

The computer program P may be deployed on a single computer or one site, or may be dispersed over multiple sites so as to be executed on multiple computers interconnected through a communication network.

The predictive learning model 54 is an image recognition learning model that outputs data indicating a remaining life or an abnormality degree of a component constituting the molding machine 1 if image data generated from physical quantity data is input. The predictive learning model 54 has a CNN (Convolutional Neural Network), for example. The processing unit 51 transfer-trains or fine-tunes the existing trained model to generate a learning model specific for inferring the remaining life or the degree of abnormality of a specific molding machine 1 and its component.

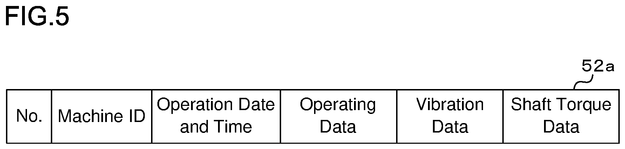

FIG. 5 is a conceptual diagram depicting an example of a record layout of the collection data DB 52a. The collection data DB 52a, which is provided with a hard disk and Database Management System (DBMS), stores various physical quantity data collected from the molding machine 1. For example, the collection data DB 52a has a "No." (record number) column, a "machine ID" column, an "operation date and time" column, an "operating data" column, a "vibration data" column and a "shaft torque data" column.

The "machine ID" column stores a machine identifier of the molding machine 1. The "operation date" column stores information indicating the year, month and date when various types of data stored as records were acquired. The "operating data" column stores time-series physical quantities indicating an operating state of the molding machine 1 such as motor current, a rotational speed of the screw 11, a tip end pressure of the screw 11, a die head pressure, a feeder supply amount (supply amount of resin row material), an extruder output, a cylinder temperature, a resin pressure and the like. The "vibration data" column stores vibration data as time-series physical quantity data. The "shaft torque data" column stores torque data of the screw 11 as time-series physical quantity data.

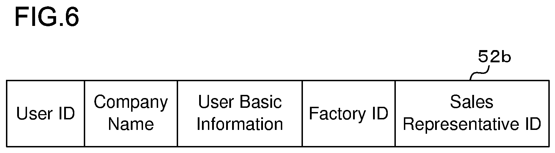

FIG. 6 is a conceptual diagram depicting an example of a record layout of the user DB 52b. The user DB 52b, which is provided with a hard disk and DBMS, stores basic information of the users and the like. The user DB 52b contains, for example, a "User ID" column, a "company name" column, a "user basic information" column, a "factory ID" column and a "sales representative ID" column.

The "user ID" column stores an identifier of the user of the molding machine 1. The "company name" column stores a name of a company, which is the user. The "user basic information" column stores basic information of the user such as, for example, the capital, the sales, the number of employees and the like of the company, which is the user. The "factory ID" column stores a factory identifier that identifies one or more factories that belong to the user. The factory identifier is associated with information on a factory such as a factory name and the like. The "sales representative ID" column stores a sales representative ID for identifying a sales representative associated with the user identified by the user ID.

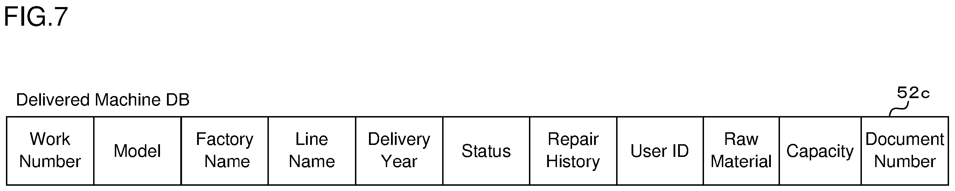

FIG. 7 is a conceptual diagram depicting an example of the record layout of the delivered machine DB 52c. The delivered machine DB 52c, which is provided with a hard disk and DBMS, stores machine-related information such as a specification and a status of the molding machine 1 delivered to the factory of the user. The delivered machine DB 52c contains, for example, a "work number" column, a "model" column, a "factory name" column, a "line name" column, a "delivery year" column, a "status" column, a "repair history" column, a "user ID" column, a "raw material" column, a "capacity" column and a "document number" column.

The "work number" column stores a work number that is a machine identifier of the molding machine 1 delivered to the factory of the user. The "model" column stores information indicating a model of the molding machine 1. The "factory name" column stores a name or an identifier of the factory where the molding machine 1 is installed. The "line name" column stores a line name of the line where the molding machine 1 is installed. The "delivery year" column stores a year, month and date when the molding machine 1 was delivered. The "status" column stores information indicating a status of the molding machine 1. The information indicating the status of the molding machine 1 includes, for example, information indicating installation, non-installation, under operation and under repair. The "repair history" column stores a repair history including the information on the date of repair of the molding machine 1, details of the repair, a person in charge and the like. The "user ID" column stores a user ID of the company as a delivery destination of the molding machine. The user ID corresponds to a name of the company that demands the molding machine 1. The "raw material" column stores information indicating a raw material input to the molding machine 1. The "capacity" column stores a capacity of the molding machine 1 such as a production amount per unit hour (kg/hour) in the case of an extruder, for example. The "document number" column stores an instruction manual and specification information for the molding machine 1.

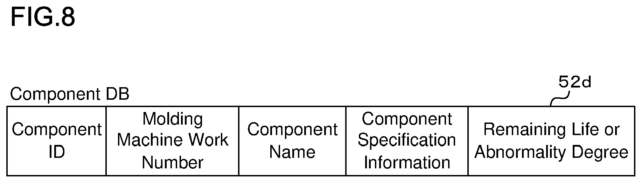

FIG. 8 is a conceptual diagram depicting an example of a record layout of the component DB 52d. The component DB 52d, which is provided with a hard disk and DBMS, stores information on the components that constitute the molding machine 1 used by the user. The component DB 52d contains, for example, a "component ID" column, a "molding machine work number" column, a "component name" column, a "component specification information" column and a "remaining life or abnormality degree" column.

The "component ID" column stores a component identifier of a component constituting the molding machine 1. The "molding machine work number" column stores a work number corresponding to the machine identifier of the molding machine 1. The molding machine work number desirably includes information that can be used to determine whether the machine is a product of a maintenance company or a product of another company.

The "component name" column stores a name of the component. The "component specification information" column stores specification information on a product specification of the component corresponding to the component ID. For example, the specification information of the screw 11 and the reduction gear 14 that constitute the extruder is stored. The components that constitute the molding machine 1 are not necessarily mass-produced products, but are components manufactured specific for each user. The specification information includes information for estimating a replacement cost of the component. The specification information includes information necessary for securing spare parts by manufacturing components, for example.

The "remaining life or abnormality degree" column stores a remaining life or an abnormality degree of the component corresponding to the component ID. The remaining life or the abnormality degree is predicted by the predictive learning model 54.

The document DB 52e stores any information related to the component constituting the molding machine 1, such as TIPS information, for example. The TIPS information includes a description of the component, a method of maintenance and the like.

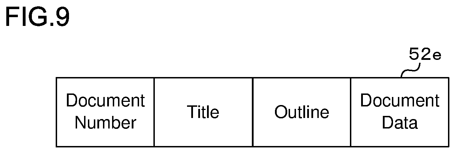

FIG. 9 is a conceptual diagram depicting an example of a record layout of the document DB 52e. The document DB 52e, which is provided with a hard disk and DBMS, stores technical information of the molding machine 1. The document DB 52e contains, for example, a "document number "column, a "title" column, an "outline" column and a "document data" column.

The "document number" column stores a document number for identifying documents. The "title" column stores a title of the document. The "outline" column stores an outline of the document. The "document data" column stores document data such as advertisement information related to the molding machine 1, technical information of the molding machine 1, an instruction manual, specification information, a maintenance management method, TIPS information, or video of the molding machine 1. The TIPS information includes a description, a maintenance/inspection method and the like of the component.

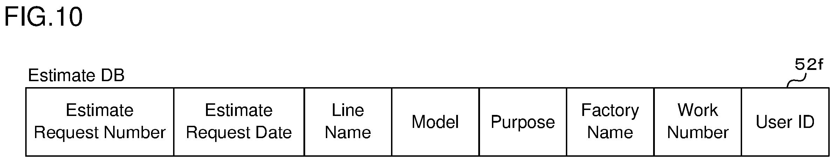

FIG. 10 is a conceptual diagram depicting an example of a record layout of the estimate DB 52f. The estimate DB 52f, which is provided with a hard disk and DBMS, stores an estimate history provided to the user. The estimate DB 52f contains, for example, an "estimate request number" column, an "estimate request date" column, a "line name" column, a "model" column, an "purpose" column, a "factory name" column, a "work number" column and a "user ID" column.

The "estimate request number" column stores an estimate request number for identifying multiple estimate requests from the user. The "estimate request date" column stores year, month and date when the information processing apparatus 5 received the estimate request. The "line name" column stores the name of a line where a component to be estimated is used. The "model" column stores the name of a model of the molding machine 1 in which the component is used. The "purpose" column stores a purpose for using a component to be estimated such as replenishment of inventory, overhaul, or the like. The "factory name" column stores a name of the factory where the component is used. The "work number" column stores a work number of the molding machine 1 in which the component is used. The "user ID" column stores a user ID of the ordering source.

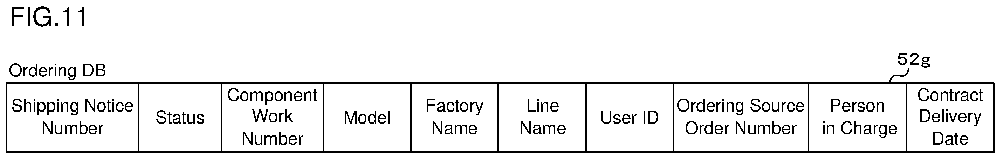

FIG. 11 is a conceptual diagram depicting an example of a record layout of the ordering DB 52g. The ordering DB 52g, which is provided with a hard disk and DBMS, stores information on ordering of the molding machine 1 or a component thereof. The ordering DB 52g contains, for example, a "shipping notice number" column, a "status" column, a "component work number" column, a "model" column, a "factory name" column, a "line name" column, a "user ID" column, an "ordering source order number" column, a "person in charge" column and a "contract delivery date" column.

The "shipping notice number" column stores a number for identifying a shipping notice of a component. The "status column" stores information indicating a shipping status of the component. The "component work number" column stores a work number for identifying the component to be shipped. The "model" column stores information on a model of the molding machine 1 in which the component is used. The "factory name" column stores a name of the factory where the component is used. The "line name" column stores a line name where the component is used. The "user ID" column stores a user ID indicating a shipping destination of the component. The "ordering source order number" column stores an order number of the ordering source. The "person in charge" column stores information for identifying a person in charge of placing an order of the component. The "contract delivery date" column stores information indicating a contract delivery date of the component.

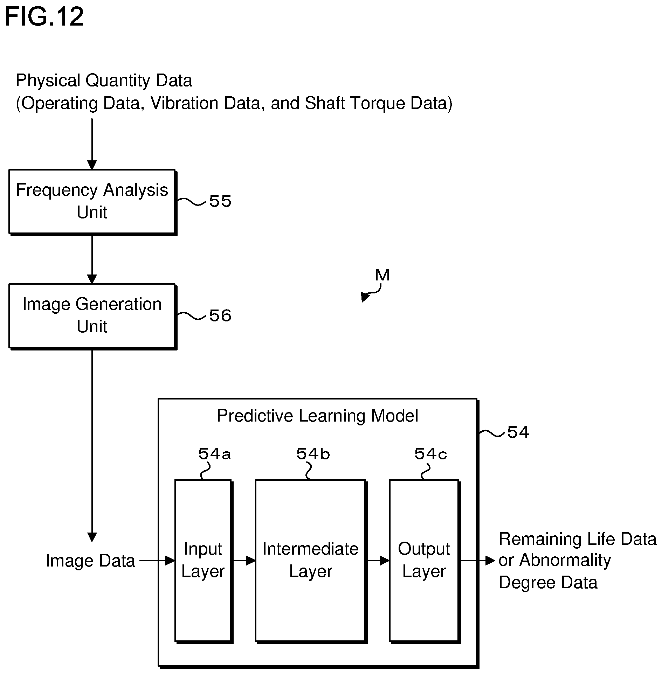

FIG. 12 is a block diagram depicting an inference processing unit M for predicting a remaining life or an abnormality degree of a component. The inference processing unit M includes the predictive learning model 54, a frequency analysis unit 55 and an image generation unit 56. Note that each functional part of the inference processing unit M may be realized in software by the processing at the processing unit 51, or some or all of the functional parts may be realized in hardware.

The frequency analysis unit 55 is an arithmetic processing unit that Fourier-transforms the time-series physical quantity data into physical quantity data of the frequency component. The frequency analysis unit 55 may Fourier-transform the physical quantity data by Short-Time Fourier Transform (STFT). The image generation unit 56 is an arithmetic processing unit that converts the Fourier-transformed physical quantity data into the image data representing the physical quantity data with an image. For example, the physical quantity data may be represented on an image plane with the frequency component on the horizontal axis and the frequency component on the vertical axis of the image. An image obtained by Fourier-transforming physical quantity data is called a Fourier transform image.

The method of frequency analysis may employ, not limited to STFT, Wavelet Transformation, Stockwell Transform, Wigner distribution function, Empirical Mode Decomposition, Hilbert-Huang Transform or the like.

The predictive learning model 54, which is a convolutional neural network (CNN), includes an input layer 54a to which image data of the Fourier transform image is input, an intermediate layer 54b and an output layer 54c that outputs remaining life data indicating the remaining life of the component or abnormality degree data indicating an abnormality degree of the component.

The input layer 54a has multiple nodes to which the pixel values of the respective pixels constituting the Fourier transform image are input. The intermediate layer 54b is configured by alternately connecting convolutional layers for convolving pixel values of the pixels of the Fourier transform image input to the input layer 54a and pooling layers for mapping the pixel values convolved in the convolutional layer. The intermediate layer 54b extracts the features of the Fourier transform image while compressing the pixel information of the Fourier transform image, and outputs the extracted Fourier transform image, i.e., the features of the physical quantity data, to the output layer 54c.

The output layer 54c has nodes that output remaining life data indicating a remaining life or abnormality degree data indicating an abnormality degree of the component at the time when the physical quantity data is measured.

The predictive learning model 54 has been trained so as to output remaining life data indicating the remaining life equal to or longer than a predetermined time period at the latest necessary for securing a spare of the component of the molding machine 1. Moreover, the predictive learning model 54 has been trained so as to output the degree of abnormality occurring before at least the predetermined time period.

A generation method of the predictive learning model 54 is as described below. First, the predictive learning model 54 to be tuned is prepared. For example, an image recognition model pre-trained using general image data as training data may be prepared.

The prepared predictive learning model 54 is then fine-tuned by being trained using the known training data. For example, the molding machine 1 as an experimental machine is operated while mounted with a component whose remaining life or abnormality degree is known. The image data obtained by operating the experimental machine is attached with label data indicating the known remaining life or abnormality degree to create the known training data.

The remaining life attached when training data is generated includes a remaining life equal to or longer than a predetermined time period required for securing a spare of the component of the molding machine 1. **In** the case where the predictive learning model 54 that outputs an abnormality degree is created, the abnormality degree to be attached when training data is created includes an abnormality degree occurring before at least the predetermined time period. **In** other words, training data is created using image data obtained by operating the molding machine 1 provided with a component having a remaining life equal to or longer than the predetermined time period required to secure a spare of the component in the molding machine 1.

The prepared predictive learning model 54 is machine-trained using the above-mentioned known training data. More specifically, the processing unit 51 optimizes the weight coefficients of the predictive learning model 54 by the error backpropagation method, the error gradient descent method or the like with the training data to machine-train the predictive learning model 54. The processing unit 51 then stores the trained predictive learning model 54 in the storage unit 52 of the information processing apparatus 5.

Note that the processing unit 51 may create new training data based on the image data obtained during actual operation of the molding machine 1 and may retrain the predictive learning model 54 using the created new training data at an appropriate timing. The processing unit 51 creates new training data by attaching the physical quantity data acquired from the molding machine 1 during operation with a correction label as teacher data and re-trains the predictive learning model 54.

While an example where the information processing apparatus 5 performs retraining was described here, another computer or server may be configured to retrain the predictive learning model 54 and transmit various parameters of the retrained predictive learning model 54 to the information processing apparatus 5.

Note that the predictive learning model 54 may employ CNN by way of example, but may also be constructed by Multilayer perceptron (MLP), Convolutional Neural Network (CNN), Graph Neural Network (GNN), Graph Convolutional Network (GCN), Recurrent Neural Network (RNN), Long Short Term Memory (LSTM) and other neural network models. The predictive learning model 54 may also be constructed by using an algorithm such as decision trees, random forests, Support Vector Machine (SVM) or the like.

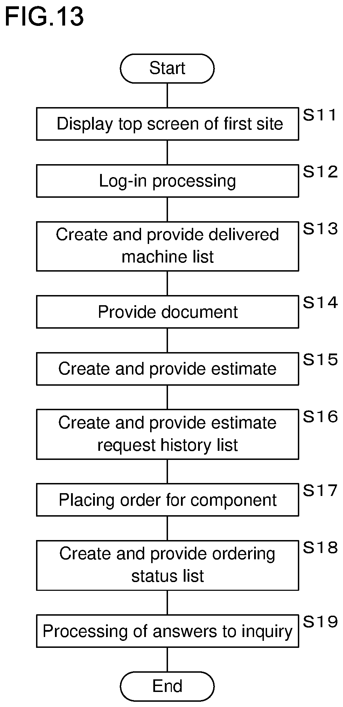

FIG. 13 is a flowchart depicting a processing procedure of the information processing apparatus 5 according to Embodiment 1. The processing unit 51 of the information processing apparatus 5 executes the following processing in response to the terminal devices 6a, 6b gaining access to and making a request to a machine management site. The details of the request and response processing performed between the information processing apparatus 5 and the terminal devices 6a, 6b will not appropriately be described.

If the terminal devices 6a and 6b access the machine management site provided by the information processing apparatus 5, the processing unit 51 of the information processing apparatus 5 provides the terminal devices 6a and 6b with data that constitutes the web page of the machine management site to cause the terminal devices 6a and 6b to display a top screen 7 of the machine management site (see FIG. 2) (step S11).

The top screen 7 of the machine management site contains multiple icons, such as a "my page" icon 71, an "ordering status confirmation" icon 72, a "delivered machine list" icon 73, a "download document" icon 74, an "estimate request" icon 75 and an "inquiry" icon 76 as depicted in FIG. 2.

Next, in response to a login request by the terminal devices 6a and 6b, the processing unit 51 of the information processing apparatus 5 performs log-in processing such as authenticating a user, a sales representative or the like of the terminal devices 6a and 6b (step S12). The logged-in user or sales representative taps or clicks an icon displayed on the top screen 7 of the machine management site to access a page corresponding to each icon. The following description will be made assuming that the user has logged into the machine management site for the sake of simplicity. In the case where a sales representative has logged into the machine management site, the sales representative can view various information of the user whom the sales representative is in charge of using the user ID (see FIG. 6) associated with the logged-in sales representative.

If the "delivered machine list" icon 73 is operated, the processing unit 51 creates a delivered machine list 81b for the logged-in user and provides the logged-in user with the delivered machine list data (step S13). Specifically, the processing unit 51 accesses the delivered machine DB52c, extracts the data of the delivered machine for the logged-in user using the user ID of the logged-in user as a key, and creates the delivered machine list 81b. The processing unit 51 then transmits the web page data for displaying the delivered machine list display screen 81 to the terminal device 6a. The terminal device 6a receives the web page data to display the delivered machine list display screen 81.

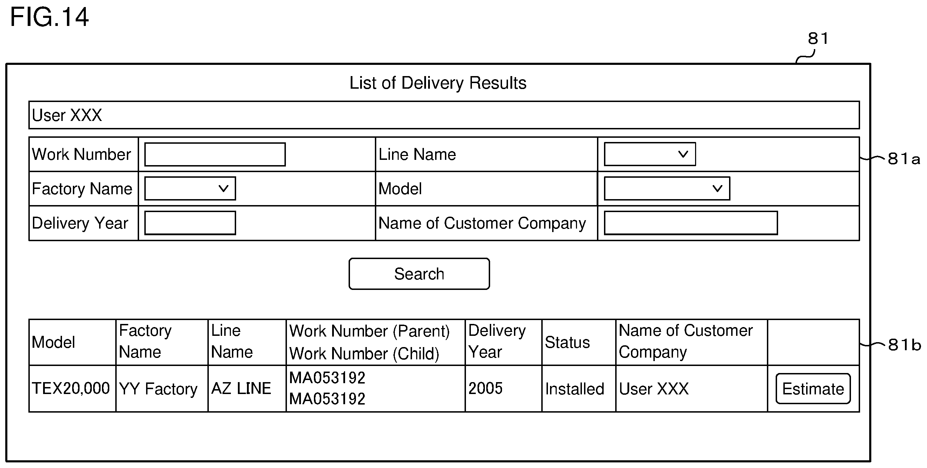

FIG. 14 is a schematic diagram depicting an example of the delivered machine list display screen 81. The delivered machine list display screen 81 contains a machine search form 81a to search for a delivered machine. The delivered machine list display screen 81 further contains the delivered machine list 81b including the model of the molding machine 1 possessed by the logged-in user, the name of the factory and line at which the molding machine 1 is installed, the work number, the delivered year, the status and the name of the customer company. In the case where a search condition is entered in the machine search form 81a and a search button is operated, the processing unit 51 specifies the molding machine 1 possessed by the user that matches the search condition and displays in list form the information in the delivered machine list 81b. A hyper link is inserted in the text representing the model.

In the case where the model name is tapped or clicked, the processing unit 51 provides the terminal device 6b with a delivered machine detail screen 82 that displays in list form the detailed information of the molding machine 1 that corresponds to the operated model name.

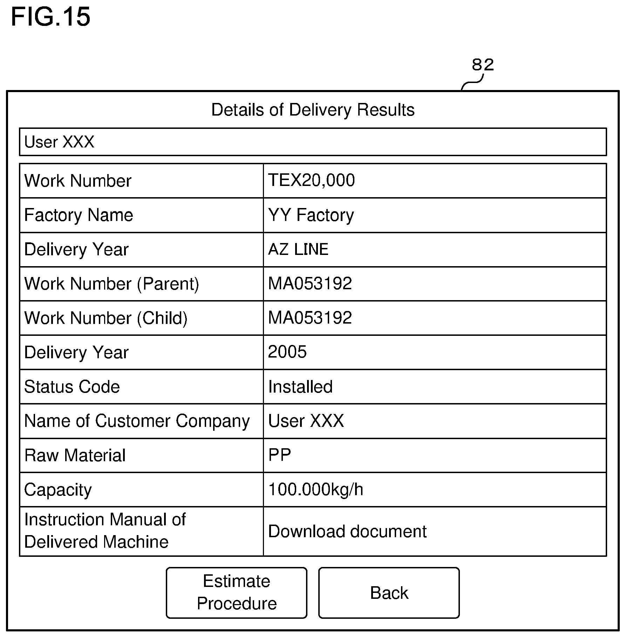

FIG. 15 is a schematic diagram depicting an example of the delivered machine detail screen 82. The delivered machine detail screen 82 contains, for example, detailed information including the specification of the extruder, which is the delivered machine, in addition to the above-mentioned information on the delivered machine. For example, the delivered machine detail screen 82 includes display of raw materials to be input to the extruder, capacity and the like. The delivered machine detail screen 82 further contains a link to download instruction manual of the delivered machine including a method of handling the delivered machine and information on more detailed specifications thereof. In the case where the link is tapped or clicked, the processing unit 51 accesses the delivered machine DB 52c and the document DB 52e, reads out the data of the instruction manual of the delivered machine or the molding machine 1 and transmits it to the terminal device 6b.

Next, in the case where the "download document" icon 74 is operated, the processing unit 51 provides the document related to the delivered machine for the logged-in user (step S14). Specifically, the processing unit 51 accesses the delivered machine DB 52c and specifies the document number related to the delivered machine for the logged-in user using the user ID of the logged-in user as a key. The processing unit 51 then accesses the document DB 52e, extracts the data of the document related to the delivered machine for the logged-in user using the document number as a key and creates a document list 83a. The processing unit 51 transmits the web page data for displaying the document list 83a to the terminal device 6a. The terminal device 6a receives the web page data and displays the document list display screen 83.

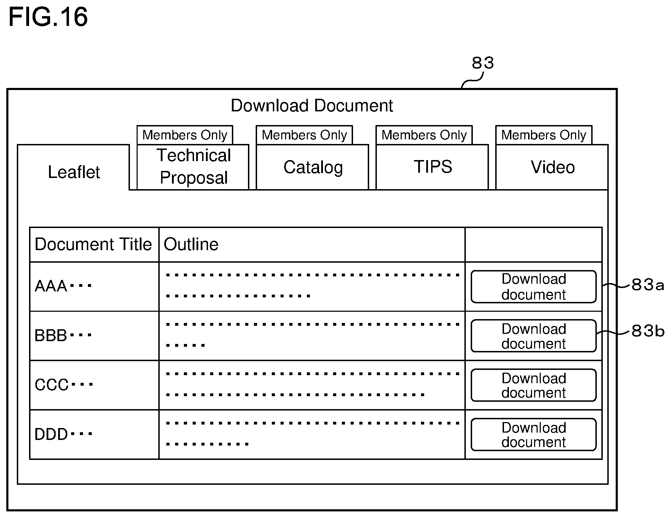

FIG. 16 is a schematic diagram depicting an example of the document list display screen 83. The document list display screen 83 contains the document list 83a including the title and outline of each document related to the delivered machine for the logged-in user, for example. The document list 83a has a download document button 83b to download each document. If the download document button 83b is operated, the processing unit 51 reads the document data corresponding to the operated download document button 83b from document DB 52e and transmits the data to the terminal device 6a.

Next, in the case where the "estimate request" icon 75 is operated, the processing unit 51 creates an estimate of the replacement cost of a component constituting the delivered machine of the logged-in user and provides the logged-in user with the estimate (step S15). Specifically, the processing unit 51 accesses the delivered machine DB 52c and the component DB 52d to extract the information on the component constituting the delivered machine for the logged-in user, and displays a to-be-estimated component selection screen 84 to accept a component to be estimated. The processing unit 51 then transmits the web page data for displaying the to-be-estimated component selection screen 84 to the terminal device 6a. The terminal device 6a receives the web page data and displays the to-be-estimated component selection screen 84.

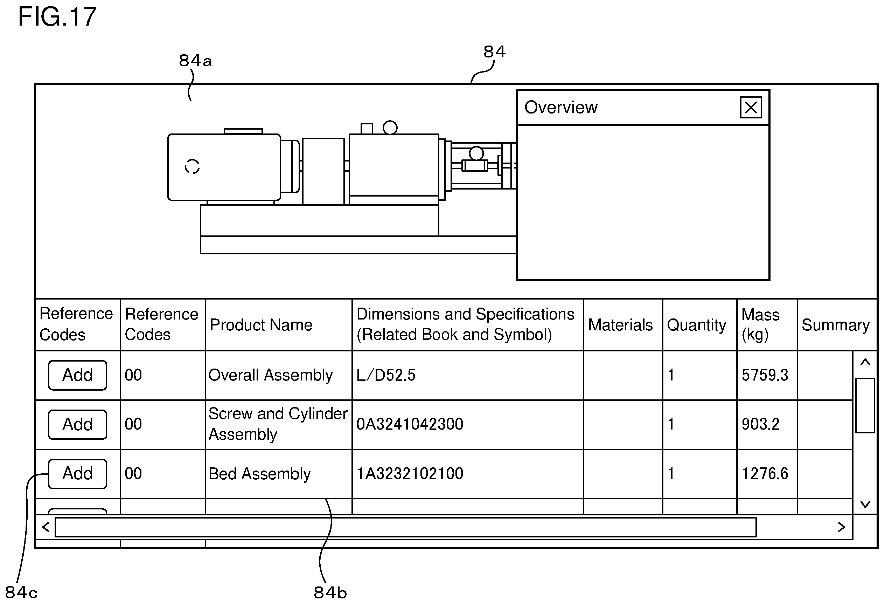

FIG 17 is a schematic diagram depicting an example of the to-be-estimated component selection screen 84. The to-be-estimated component selection screen 84 contains a machine image 84a, such as side views, a plan view, a front view or the like depicting the appearance or cross-section of the molding machine 1 and a component list 84b, which is a list of the components that constitute the molding machine 1. The machine image 84a includes reference codes indicating the components constituting the molding machine 1. The component list 84b displays in list form the reference codes designated to the components, product names, dimensions and specifications, materials, quantity, mass and the like. The component list 84b has a select button ("add button" 84c in FIG. 17) to select a component to be estimated. The "add" button 84c is provided to each of the lines of the multiple components. In the case where the "add" button 84c is operated, the information processing apparatus 5 accepts the component corresponding to the operated "add" button 84c as a target to be estimated. In the case where an estimate create button (not illustrated) is operated, the processing unit 51 creates a written estimate for replacing the selected component. The processing unit 51 then transmits the written estimate data to the terminal device 6a.

Next, in the case where the "my page" icon 71 is operated to perform an operation of displaying an estimate request list contained in the "my page," the processing unit 51 of the information processing apparatus 5 creates an estimate history list display screen 85 and provides the logged-in user with the screen (step S16).

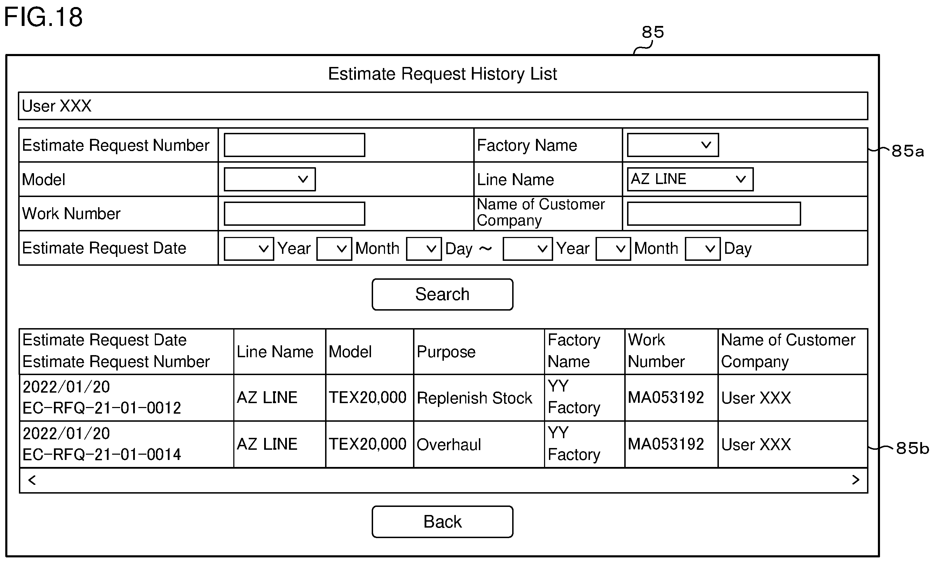

FIG. 18 is a schematic diagram depicting an example of the estimate history list display screen 85. The estimate history list display screen 85 contains an estimate search form 85a to search for a written estimate. The estimate history list display screen 85 further contains an estimate history list 85b including an estimate request date, an estimate request number, a line name, a model, a purpose, a factory name, a work number and a demander company name. In the case where a search condition is entered in the estimate search form 85a and a search button is operated, the processing unit 51 specifies a written estimate that matches the search condition and displays in list form the written estimate in the estimate history list 85b.

If the estimate created at step S15 is satisfactory, the logged-in user can place an order for the component via the terminal device 6a. The information processing apparatus 5 having received an order instruction performs processing of placing an order for the component (step S17). For example, the information processing apparatus 5 sends the order details for the component to the terminal of a factory that manufactures the component. The information processing apparatus 5 may be configured to report placement of order for the component to the terminal device 6b of the sales representative associated with the logged-in user.

In the case where the "ordering status confirmation" icon 72 is next operated, an ordering status list display screen 86 depicting an ordering status of the component is created and provided to the logged-in user (step S18). Moreover, in the case where the "inquiry" icon 76 is operated, the information processing apparatus 5 displays an inquiry screen and accepts an inquiry from the logged-in user (step S19).

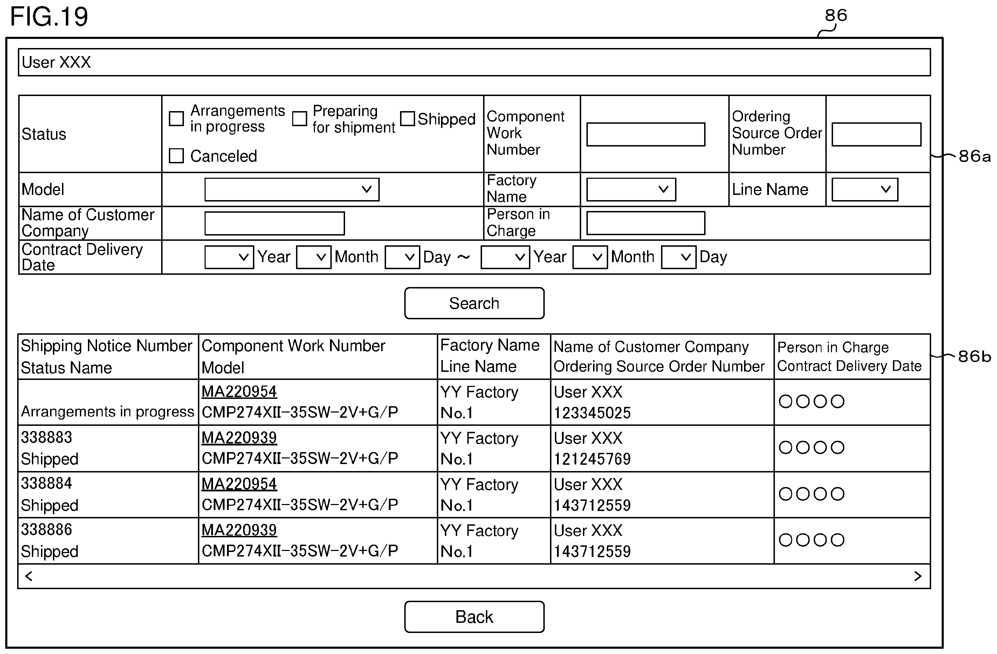

FIG. 19 is a schematic diagram depicting an example of the ordering status list display screen 86. The ordering status list display screen 86 has an order search form 86a. The ordering status list display screen 86 further contains an ordering status list 86b including a shipping notice number, a status, a component work number, a model, a factory name, a line name, a demander company name, an ordering source order number, a person in charge and a contract delivery date. The processing unit 51 accesses the ordering DB 52g, reads the data on the ordering status of the component for the logged-in user using the user ID of the logged-in user as a key, and creates the ordering status list 86b. The processing unit 51 then transmits web page data for displaying the ordering status list display screen 86 to the terminal device 6a. The terminal device 6a receives the web page data to display the ordering status list display screen 86. In the case where a search condition is entered in the order search form 86a and a search button is operated, the processing unit 51 specifies the data related to the ordering status that matches the search condition and displays in list form the ordering status in the ordering status list 86b.

As above, though the case where the user has logged into the machine management site was described, the sales representative having logged into the machine management site using the terminal device 6b can likewise confirm the specification, status and the like of the molding machine 1 of the user managed by the sales representative. Specifically, the processing unit 51 accesses the user DB 52b to specify one or more user IDs associated with the ID of the logged-in sales representative. Then, by performing the similar processing described above using the specified user ID, the processing unit 51 can provide the terminal device 6b with various information indicating the specifications, status and the like of the molding machine 1 of the user managed by the sales representative.

As described above, the information processing method and the like according to Embodiment 1 can provide the user and the sales representative with the machine list indicating the specifications and status of multiple molding machines 1 installed in multiple factories that belong to each user.

For example, the user and the sales representative can confirm the repair history, technical information, maintenance management method and the like of each molding machine.

**In** addition, the processing unit 51 can display, on the terminal devices 6a and 6b, the delivered machine list display screen 81, the delivered machine detail screen 82, the document list display screen 83, the estimate history list display screen 85 and the ordering status list display screen 86. The user and the sales representative can check each of the display screens and grasp the status and specification of the delivered machines at each of the multiple factories that belong to the user, the history of estimate of components, the ordering status and the like.

### (Embodiment 2)

The information processing apparatus 5 according to Embodiment 2 is different from that of Embodiment 1 in that it can make a transition between the machine management site (first site) and the machine condition information provision site (second site). Since the other configurations of the information processing apparatus 5 are similar to those of the information processing apparatus 5 in Embodiment 1, corresponding parts are designated by similar reference codes and detailed description thereof will not be repeated.

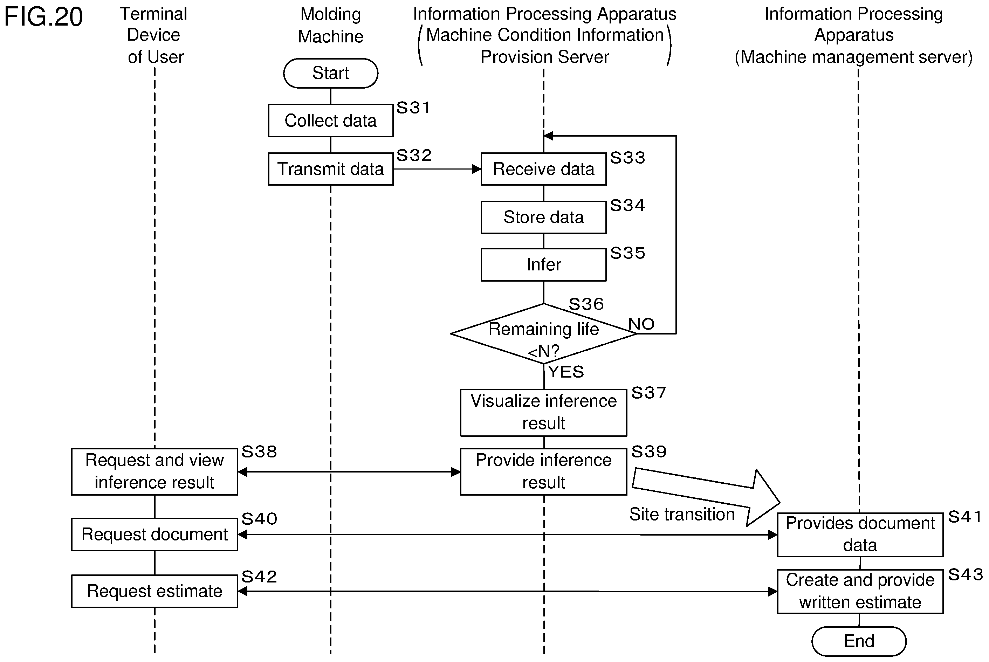

FIG. 20 is a flowchart depicting an information processing procedure including processing of making a transition to the machine management site according to Embodiment 2. The data collection device 3 of the molding machine 1 collects physical quantity data related to the conditions of multiple components constituting the molding machine 1 (step S31) and transmits the collected physical quantity data to the information processing apparatus 5 functioning as the first server (step S32). Note that multiple molding machines 1 and data collection devices 3 are provided, and the multiple data collection devices 3 transmit physical quantity data collected from the multiple molding machines 1 to the information processing apparatus 5.

The processing unit 51 of the first server receives the physical quantity data transmitted from the data collection device 3 (step S33). The processing unit 51 stores the received physical quantity data in the collection data DB 52a (step S34). Note that the processing unit 51, which executes the processing at step S33, functions as an acquisition unit that acquires physical quantity data.

The processing unit 51 then infers a remaining life or an abnormality degree of the components constituting the molding machine 1 based on the physical quantity data accumulated in the collection data DB 52a (step S35). Specifically, the processing unit 51 performs frequency analysis on the physical quantity data to convert the data into image data and inputs the image data representing the physical quantity data to the predictive learning model 54 to output the remaining life data or the abnormality degree data of the components. Note that the processing unit 51 calculates the remaining life or abnormality degree of each of the multiple components that constitute the multiple molding machines 1. In the case where physical quantity data related to the condition of the multiple components constituting one molding machine 1 is acquired, the processing unit 51 calculates the remaining life or the abnormality degree for each of the multiple components.

Next, the processing unit 51 determines whether or not the remaining life is shorter than a predetermined time N (step S36). The predetermined time N is desirably longer than the time required for at least manufacturing the component and securing a spare part. The predetermined time N varies depending on the type of the component.

Note that the processing unit 51 may be configured to determine whether or not the abnormality degree is less than a predetermined value corresponding to the above-mentioned predetermined time N.

If determining that the remaining life is equal to or longer than the predetermined time N (step S36: NO), the processing unit 51 returns the processing to step S33. If determining that the remaining life is shorter than the predetermined time N (step S36: YES), the processing unit 51 makes an inference result display screen 9 appear on the machine condition provision site (step S37). In other words, when the user and the sales representative access the machine condition provision site through the terminal devices 6a, 6b, respectively, the processing unit 51 causes the terminal devices 6a, 6b to display the inference result display screen 9 for the remaining life of the component.

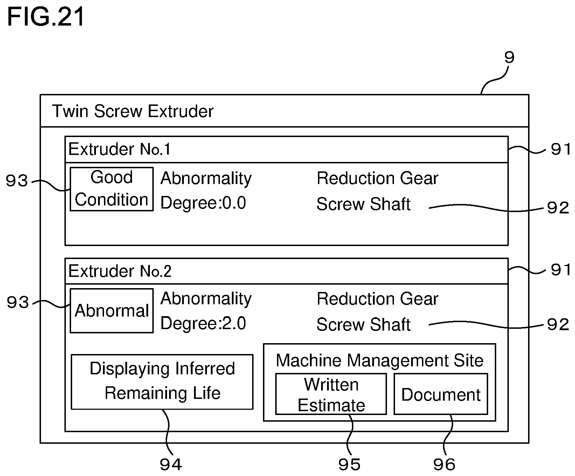

FIG. 21 is one example of the inference result display screen 9. The inference result display screen 9 contains a condition display section 91 for displaying conditions of the components constituting each molding machine 1 of one or more molding machines 1 that are used by the user. The condition display section 91 contains, for example, a component name display section 92 for displaying the name of a component constituting the molding machine 1 and an icon 93 for indicating whether or not the component is abnormal. "Abnormal" corresponds to, for example, the remaining life being shorter than the predetermined time N. Moreover, the condition display section 91 displays the abnormality degree of the component by a numeral.

If an abnormality occurs in a component constituting the molding machine 1, the condition display section 91 displays a remaining life display icon 94 for displaying an inferred remaining life of the component. In the case where the remaining life display icon 94 is operated by the user, the information processing apparatus 5 displays a graph indicating the time variation of the physical quantity related to the condition of the component and the inferred remaining life of the component.

If an abnormality occurs in a component constituting the molding machine 1, the condition display section 91 displays a written estimate icon 95 and a document icon 96 for making a transition to the machine management site that provides a written estimate of the replacement cost of the component and the document data. The written estimate icon 95 includes the web page address of an estimate request in the machine management site and the work number of the component 1. The document icon 96 includes the web page address of the document list display screen 83 in the machine management site and the work number of the molding machine 1.

The terminal device 6a of the user requests the machine condition information provision site to provide an inference result related to the remaining life of the component in response to the user operating the remaining life display icon 94 (step S38). The processing unit 51 of the machine condition information provision site transmits an inference result of the remaining life of the component to the terminal device 6a in response to the request from the terminal device 6a (step S39). The terminal device 6a receives the inference result transmitted from the machine condition information provision site and displays the received inference result. The user can view the inference result of the remaining life or the abnormality degree of the component.

The terminal device 6a of the user requests the machine management site to provide the document related to the molding machine 1 indicated by the work number in response to the user operating the document icon 96 (step S40). The processing unit 51 of the machine management site reads the document data associated with the work number from the document DB 52e in response to the request from the terminal device 6a and provides the data (step S41).

The terminal device 6a of the user requests the machine management site to create a written estimate of the component constituting the molding machine 1 indicated by the work number in response to the user operating the written estimate icon 95 (step S42). The processing unit 51 of the machine management site displays the to-be-estimated component selection screen 84 in response to the request from the terminal device 6a, and creates and provides the written estimate (step S43).

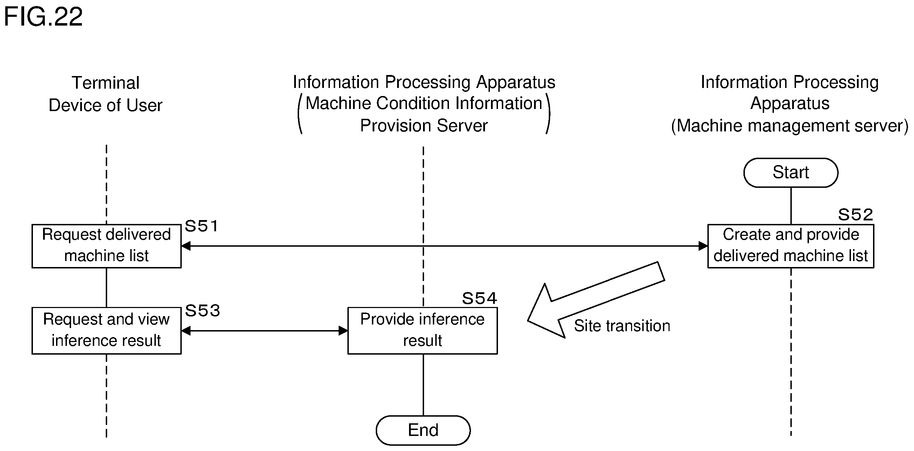

FIG. 22 is a flowchart depicting an information processing procedure including processing of making a transition to the machine condition information provision site according to Embodiment 2. The terminal device 6a of the user requests for the delivered machine list 81b in response to the operation by the user (step S51). The processing unit 51 of the machine management site creates the delivered machine list 81b in response to the request from the terminal device 6a and provides the logged-in user with the delivered machine list 81b (step S52). The delivered machine list 81b according to Embodiment 2 contains the remaining life display icon for the molding machine 1.

The terminal device 6a of the user requests the machine condition information provision site to provide an inference result related to the remaining life in response to the user operating the remaining life display icon (step S53). The processing unit 51 of the machine condition information provision site provides an inference result related to the remaining life of the molding machine 1 in response to the request from the terminal device 6a (step S54).

Though the cases where the user has logged into the machine management site and the machine condition information provision site were described above, the sales representative having logged into the machine management site and the machine condition information provision site using the terminal device 6b can likewise check the specification and condition of the molding machine 1 of the assigned user and the remaining life and abnormality degree of a component constituting each of the molding machines 1. Specifically, the processing unit 51 accesses the user DB 52b to specify one or more user IDs associated with the ID of the logged-in sales representative. The processing unit 51 then performs similar processing described above using the specified user ID to thereby provide the terminal device 6b with various information indicating the specification and condition of the molding machine 1 of the user managed by the sales representative and the remaining life and abnormality degree of a component constituting the molding machines 1.

As described above, according to the information processing method or the like of Embodiment 2, by making a transition between the machine condition information provision site and the machine management site, the specification and condition of the molding machines 1 installed in multiple factories that belong to the user can be managed while more specific conditions such as the remaining life and the like of the molding machine 1 are confirmed.

In addition, the information processing apparatus 5 can provide the user and the sales representative with information indicating the remaining life or abnormality degree of a component that constitutes each of the molding machines of the user.

The means for solving the present disclosure is further described.
1. An information processing method, comprising:
   storing, in a database, an identifier for identifying each of a plurality of users, a factory identifier for identifying each of a plurality of factories that belong to each of the plurality of users, a machine identifier for identifying each of a plurality of industrial machines installed in each of the plurality of factories, and machine-related information including specifications of the plurality of industrial machines in association with each other;
   reading, from the database, the factory identifier, the machine identifier and the machine-related information that are associated with the identifier of one of the users and creating a machine list including the plurality of factories that belong to the one of the users, the plurality of industrial machines that are installed in the plurality of factories and the machine-related information; and
   providing the one of the users and an external party associated with the one of the users with data of the created machine list.
2. The information processing method according to clause 1, wherein the machine-related information includes information indicating a condition of the industrial machines.
3. The information processing method according to clause 1 or 2, wherein the machine-related information includes a repair history of the industrial machines, technical information of the industrial machines or a maintenance and management method of the industrial machines.
4. The information processing method according to any one of clauses 1 to 3, further comprising:
   storing in the database an ordering status and a delivery date of a component constituting the plurality of industrial machines in association with the identifiers of the plurality of users;
   reading the ordering status and the delivery date associated with the identifier of the one of the users and creating an ordering list of the ordering status and delivery date of the component for the one of the users; and
   providing the one of the users and an external party associated with the one of the users with data of the created ordering list.
5. The information processing method according to any one of clauses 1 to 4, further comprising:
   acquiring physical quantity data related to a condition of a component constituting the industrial machines of the one of the users;
   inferring a remaining life or an abnormality degree of the component based on the acquired physical quantity data; and
   providing the one of the users of the industrial machines and an external party of the user with a generated inference result.
6. The information processing method according to clause 5 further comprising providing the machine list and the inference result via a first site for displaying the machine list and a second site for displaying the inference result.
7. The information processing method according to clause 6, wherein
   the first site includes a link for making a transition from a page associated with the machine list to a page associated with the inference result of the second site, and
   the second site includes a link for making a transition from a page associated with the inference result to a page associated with the machine list of the first site.

- 1: molding machine
- 2: sensor
- 3: data collection device
- 4: router
- 5: information processing apparatus
- 6a: terminal device of user
- 6b: terminal device of sales representative
- 10: cylinder
- 10a: hopper
- 11: screw
- 12: die
- 13: motor
- 14: reduction gear
- 15: control device
- 31: control unit
- 32: storage unit
- 33: communication unit
- 34: data input unit
- 50: recording medium
- 51: processing unit
- 52: storage unit
- 53: communication unit
- 54: predictive learning model
- 54a: input layer
- 54b: intermediate layer
- 54c: output layer
- 55: frequency analysis unit
- 56: image generation unit
- 52a: collection data DB
- 52b: user DB
- 52c: user machine DB
- 52d: component-related information DB
- 52e: written estimate template
- P: computer program

## Claims

1. An information processing method, comprising:
storing, in a database, an identifier for identifying each of a plurality of users, a factory identifier for identifying each of a plurality of factories that belong to each of the plurality of users, a machine identifier for identifying each of a plurality of industrial machines installed in each of the plurality of factories, and machine-related information including specifications of the plurality of industrial machines in association with each other;
reading, from the database, the factory identifier, the machine identifier and the machine-related information that are associated with the identifier of one of the users and creating a machine list including the plurality of factories that belong to the one of the users, the plurality of industrial machines that are installed in the plurality of factories and the machine-related information; and
providing the one of the users and an external party associated with the one of the users with data of the created machine list.

2. The information processing method according to claim 1, wherein the machine-related information includes information indicating a condition of the industrial machines.

3. The information processing method according to claim 1 or 2, wherein the machine-related information includes a repair history of the industrial machines, technical information of the industrial machines or a maintenance and management method of the industrial machines.

4. The information processing method according to any one of claims 1 to 3, further comprising:
storing in the database an ordering status and a delivery date of a component constituting the plurality of industrial machines in association with the identifiers of the plurality of users;
reading the ordering status and the delivery date associated with the identifier of the one of the users and creating an ordering list of the ordering status and delivery date of the component for the one of the users; and
providing the one of the users and an external party associated with the one of the users with data of the created ordering list.

5. The information processing method according to any one of claims 1 to 4, further comprising:
acquiring physical quantity data related to a condition of a component constituting the industrial machines of the one of the users;
inferring a remaining life or an abnormality degree of the component based on the acquired physical quantity data; and
providing the one of the users of the industrial machines and an external party of the user with a generated inference result.

6. The information processing method according to claim 5 further comprising providing the machine list and the inference result via a first site for displaying the machine list and a second site for displaying the inference result.

7. The information processing method according to claim 6, wherein
the first site includes a link for making a transition from a page associated with the machine list to a page associated with the inference result of the second site, and
the second site includes a link for making a transition from a page associated with the inference result to a page associated with the machine list of the first site.

8. An information processing apparatus, comprising:
a database storing an identifier for identifying each of a plurality of users, a factory identifier for identifying each of a plurality of factories that belong to each of the plurality of users, a machine identifier for identifying each of a plurality of industrial machines installed in each of the plurality of factories, and machine-related information including specifications of the plurality of industrial machines in association with each other;
a processing unit that reads, from the database, the factory identifier, the machine identifier and the machine-related information that are associated with the identifier of one of the users and creates a machine list including the plurality of factories that belong to the one of the users, the plurality of industrial machines that are installed in the plurality of factories and the machine-related information; and
a communication unit that provides the one of the users and an external party associated with the one of the users with data of the created machine list.

9. A computer program causing a computer to execute processing of:
storing, in a database, an identifier for identifying each of a plurality of users, a factory identifier for identifying each of a plurality of factories that belong to each of the plurality of users, a machine identifier for identifying each of a plurality of industrial machines installed in each of the plurality of factories, and machine-related information including specifications of the plurality of industrial machines in association with each other;
reading, from the database, the factory identifier, the machine identifier and the machine-related information that are associated with the identifier of one of the users and creating a machine list including the plurality of factories that belong to the one of the users, the plurality of industrial machines that are installed in the plurality of factories and the machine-related information; and
providing the one of the users and an external party associated with the one of the users with data of the created machine list.
